# EUROPÄISCHE PATENTSCHRIFT

(11) **EP 1 085 239 B1**
(45) Veröffentlichungstag und Bekanntmachung des Hinweises auf die Patenterteilung: **09.02.2005**
(21) Anmeldenummer: 00119029.7
(22) Anmeldetag: 01.09.2000
(51) Int. Cl.: F16H 48/08

(54) **Kegelradausgleichsgetriebe für Nutzfahrzeuge**
Differential with conical gearing for commercial vehicles
Différentiel à pignons coniques pour vehicules utilitaires

(30) Priorität: 14.09.1999 DE 19943920
(43) Veröffentlichungstag der Anmeldung: 21.03.2001
(73) Patentinhaber: MAN Nutzfahrzeuge Aktiengesellschaft, 80976 München (DE)
(72) Erfinder: Schleich, Wolfgang, Dipl.-Ing., 80686 München (DE); Bruckmeier, Stefan, Dipl.-Ing., 80339 München (DE)

(56) Entgegenhaltungen:
- DE-A- 4 313 322
- DE-C- 730 557
- DE-U- 1 827 697
- US-A- 4 860 614

## Beschreibung

Die Erfindung bezieht sich auf ein Kegelradausgleichsgetriebe eines Nutzfahrzeuges mit einem Ausgleichskegelräder tragenden Ausgleichskreuz entsprechend dem Oberbegriff der beiden Ansprüche 1 und 2.

Heutige Kegelradausgleichsgetriebe im Nutzfahrzeugbereich sind entsprechend der gattungsgemäßen DE 18 27 697 U mit geteiltem Gehäuse ausgeführt und weisen in der Regel vier Ausgleichskegelräder auf. Die Ausgleichskegelräder drehen sich auf Bolzen, die beim Nutzfahrzeug meist zu einem sogenannten Ausgleichskreuz zusammengefaßt sind. Die Bolzen sind von einem in der Mitte des Gehäuses vorgesehenen Führungsstückes gehalten.

Aus der DE 196 38 002 C1 ist ein Umlaufrädergetriebe in Kegelradbauweise bekannt, bei dem ein die Kegelräder drehbar lagerndes Zapfenkreuz vorgesehen ist, das aus zwei kurzen und einem mit diesen verbundenen langen Lagerzapfen zusammengesetzt ist. Die Lagerzapfen sind mit ihren radial außenliegenden Enden in je einer korrespondierenden Aufnahmebohrung des Gehäuseteiles aufgenommen, während die radial innenliegenden Enden der kurzen Lagerzapfen einen als Feder einer Nut-Feder-Verbindung verwendeten Stirnansatz mit rechteckigem Querschnitt aufweisen, welcher in einem von zwei als jeweilige Nut der Nut-Feder-Verbindung ausgebildeten und sich diametral am Umfang des langen Lagerzapfens gegenüberliegenden Ausnehmung formschlüssig eingreift.

Es ist Aufgabe der Erfindung, die Montagefähigkeit eines Kegelradausgleichsgetriebes für Nutzfahrzeuge in technischer Hinsicht zu optimieren.

Diese Aufgabe wird erfindungsgemäß durch die Merkmale der beiden nebengeordnet ausgeführten Ansprüche 1 und 2 gelöst.

Gemäß Anspruch 1 ist erfindungsgemäß ein Kegelradausgleichsgetriebe für Nutzfahrzeuge gegeben, das in einem Ausgleichsgehäuse ein die Ausgleichskegelräder lagerndes, aus vier gleichgestalteten Bolzen zusammengesetztes Ausgleichskreuz aufweist. Die Bolzen liegen zum Zentrum des Ausgleichskreuzes hin mit zueinander formschlüssig gestalteter Anlagekontur einander fixierend aneinander an und sind radial außenseitig durch bekannte Abstützungen axial abgestützt. Die die formschlüssige Anlage der Bolzen gewährende Anlagekontur ist durch zum gemeinsamen Zentrum des Ausgleichskreuzes hin ausgerichtete, von den Bolzen abragende Zapfenhälften gegeben, wobei deren hieran gebildete Umfangsflächen, Stirnflächen und ebene Anlageflächen miteinander korrespondierend zur Anlage gebracht sind.

Gemäß Anspruch 2 ist erfindungsgemäß ein Kegelradausgleichsgetriebe für Nutzfahrzeuge gegeben, das in einem Ausgleichsgehäuse ein die Ausgleichskegelräder lagerndes, aus vier gleichgestalteten Bolzen zusammengesetztes Ausgleichskreuz aufweist. Die Bolzen liegen zum Zentrum des Ausgleichskreuzes hin mit zueinander formschlüssig gestalteter Anlagekontur einander fixierend aneinander an und sind radial außenseitig durch bekannte Abstützungen axial abgestützt. Die die formschlüssige Anlage der Bolzen gewährende Anlagekontur ist durch zum gemeinsamen Zentrum des Ausgleichkreuzes hin ausgerichtete, an den Bolzen gebildete Kegelflächen gegeben, die miteinander korrespondierend formschlüssig zur Anlage gebracht sind.

Somit ist gemäß Anspruch 1 und 2 in vorteilhafter Weise bei guter Montagefähigkeit des Ausgleichskreuzes eine optimale Abstützung desselben im Ausgleichsgehäuse erzielt.

Gemäß einer weiteren Ausgestaltung der Erfindung können die Kegelflächen der Bolzen durch eine gemeinsame Stirnfläche abgestumpft sein.

Gemäß einer weiteren Ausgestaltung der Erfindung können als Abstützung die Bolzen des Ausgleichskreuzes radial außenseitig von einem das Kegelradausgleichsgetriebe umgebenden Tellerrad axial abgestützt sein. Alternativ hierzu kann die radial außenseitige axiale Abstützung der Bolzen des Ausgleichskreuzes durch andere bekannte Mittel erzielt werden.

Gemäß einer weiteren Ausgestaltung der Erfindung können die Bolzen mit ihren radial außenliegenden Enden in je einer hiermit korrespondierenden Aufnahmebohrung eines Ausgleichsgehäuses des Kegelradausgleichsgetriebes aufgenommen sein.

Gemäß einer weiteren Ausgestaltung der Erfindung kann das Ausgleichsgehäuse zweiteilig ausgebildet sein.

Weitere vorteilhafte Ausgestaltungen und zweckmäßige Fortbildungen des erfindungsgemäßen Kegelradausgleichsgetriebes sind aus den nachstehenden Beispielsbeschreibungen anhand der Zeichnung näher entnehmbar.

In der Zeichnung zeigen:
- Fig. 1: in einem vertikalen Längsschnitt ein vierteiliges Ausgleichskreuz eines Kegelradausgleichsgetriebes,
- Fig. 2: in Schnittdarstellung das in Fig. 1 dargestellte Kegelradausgleichsgetriebe - um eine Vertikalachse um 90° gedreht - mit einer ersten Ausführungsform des Ausgleichskreuzes,
- Fig. 3: einen gemäß Fig. 2 verwendeten Bolzen des vierteiligen Ausgleichskreuzes in Vorderansicht,
- Fig. 4: einen Bolzen gemäß Fig. 3 in Draufsicht,
- Fig. 5: eine zweite Ausführungsform eines in einem vierteiligen Ausgleichskreuz verwendeten Bolzens in Seitenansicht,
- Fig. 6: der in Fig. 5 dargestellte Bolzen in Vorderansicht,
- Fig. 7: der in Fig. 5 und 6 dargestellte Bolzen in Draufsicht und
- Fig. 8: in Schnittdarstellung ein Kegelradausgleichsgetriebe mit Bolzen gemäß der zweiten Ausführungsform (Fig. 5, 6, 7) in Vorderansicht.

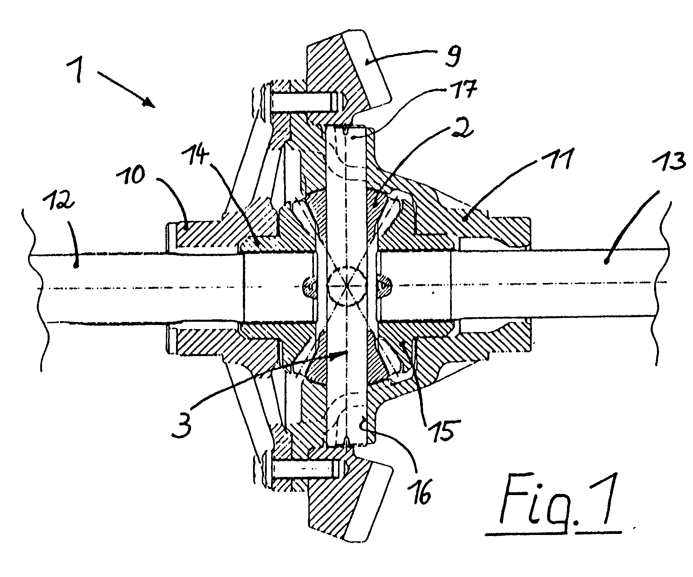

In Fig. 1 ist in vertikaler Schnittdarstellung ein Kegelradausgleichsgetriebe 1 eines Nutzfahrzeuges dargestellt. Das Kegelradausgleichsgetriebe 1 weist ein vierteiliges Ausgleichskreuz 3 auf, welches die Ausgleichskegelräder 2 trägt. Das Kegelradausgleichsgetriebe 3 ist mit seinen radial außenliegenden Enden 17 in je einer korrespondierenden Aufnahmebohrung 16 eines hier zweiteilig dargestellten Ausgleichsgehäuses 10, 11 des Kegelradausgleichsgetriebes 1 gelagert.

Innerhalb des Kegelradausgleichsgetriebes 1 sind zueinander beabstandete, einander gegenüberliegende Kegelräder 14, 15 angeordnet, welche mit den Ausgleichskegelrädern 2 kämmen. Die Kegelräder 14, 15 sind drehfest auf Steckwellen 12, 13 angeordnet, welche aus dem Ausgleichsgehäuse 10, 11 herausragen.

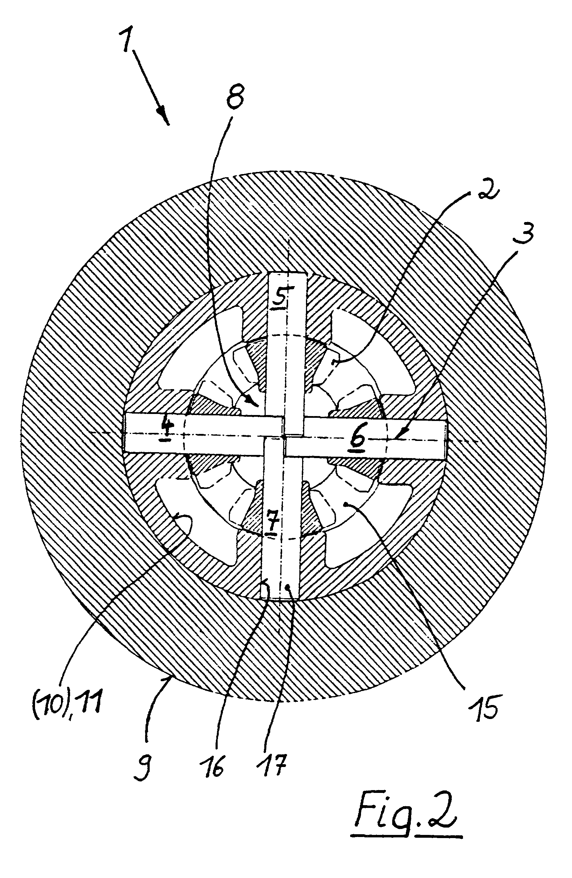

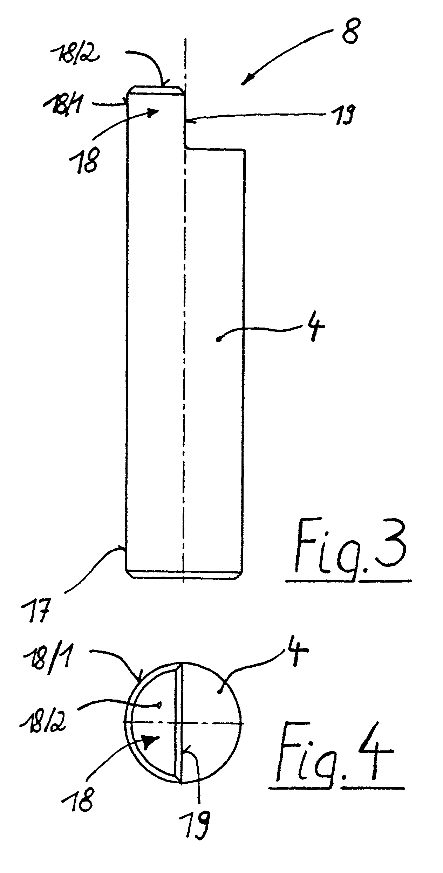

In Fig. 2 ist das Kegelradausgleichsgetriebe 1 gemäß Fig. 1 in einer um 90° um eine Vertikalachse gedrehten Schnittdarstellung gezeigt. In der hier gezeigten Version ist das vierteilige Ausgleichskreuz 3 aus exakt gleichgestalteten Bolzen 4, 5, 6, 7 formschlüssig zusammengesetzt. Die Bolzen 4, 5, 6, 7 sind im Zentrum des vierteiligen Ausgleichskreuzes 3 mit endseitig abragenden Zapfenhälften 18 versehen, welche sich untereinander im Verbund über jeweils eine hälftige Umfangsfläche 18/1, eine halbkreisförmige Stirnfläche 18/2 und einer ebenen Anlagefläche 19 der Zapfenhälfte 18 wenigstens bereichsweise formschlüssig aneinander abstützen und gemeinsam die Anlagekontur 8 bilden (Fig. 3, Fig. 4). Die Bolzen 4, 5, 6, 7 sind mit ihren radial außenliegenden Enden 17 in je einer korrespondierenden Aufnahmebohrung 16 eines Ausgleichsgehäuses 10, 11 des Kegelradausgleichsgetriebes 1 aufgenommen. Das mit den Ausgleichskegelrädem 2 kämmende Kegelrad 15 ist hier nur schematisch dargestellt.

In Fig. 3 ist Vorderansicht ein einzelner Bolzen 4 des vierteiligen Ausgleichskreuzes 3 mit einer endseitig abragenden Zapfenhälfte 18 gezeigt. Diese Zapfenhälfte 18 des Bolzens 4 bildet mit ihrer hälftigen Umfangsfläche 18/1, ihrer Stirnfläche 18/2 und ihrer innenseitig gebildeten Anlagefläche 19 im Verbund mit den übrigen Bolzen 5, 6, 7 die formschlüssige Anlagekontur 8.

In Fig. 4 ist der einzelne Bolzen 4 gemäß Fig. 3 in Draufsicht gezeigt.

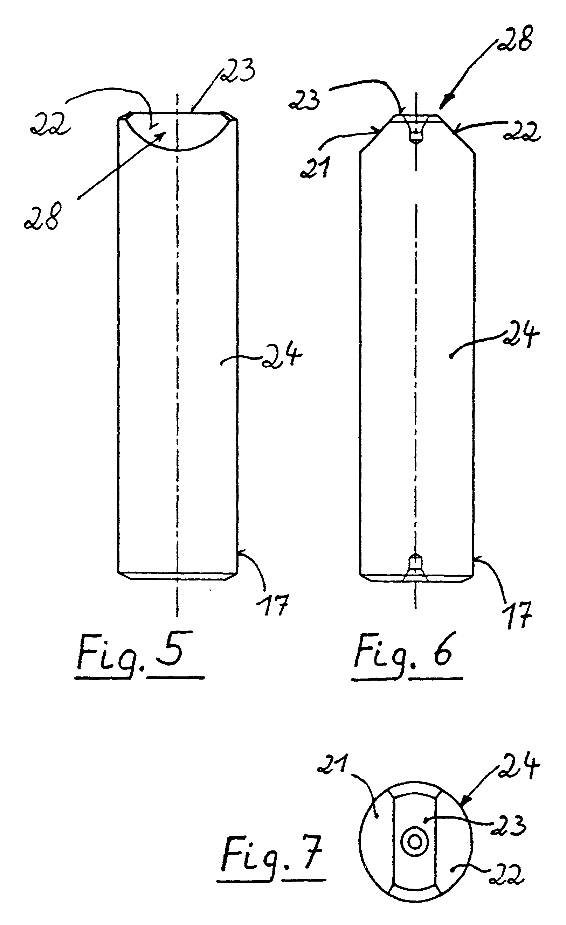

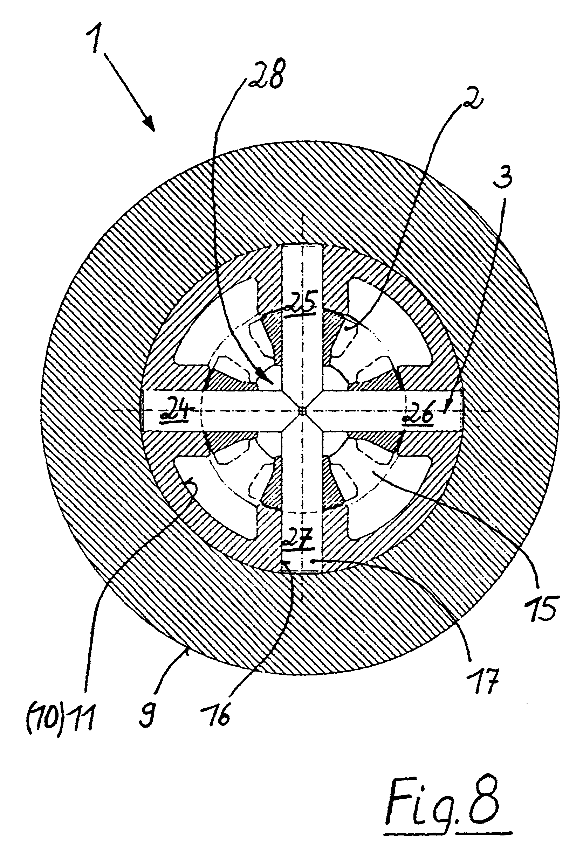

In Fig. 5 ist gemäß einer alternativen Ausführungsform ein einzelner Bolzen 24 in Seitenansicht gezeigt, der zum gemeinsamen Zentrum des vierteiligen Ausgleichskreuzes 3 hin ausgerichtet zueinander angestellte Kegelflächen 21, 22 aufweist. Die Kegelflächen 21, 22 der Bolzen 24, 25, 26, 27 korrespondieren in formschlüssiger Anlage miteinander (Fig. 8).

In Fig. 6 ist der in Fig. 5 dargestellte Bolzen 24 in Vorderansicht gezeigt. Der Bolzen 24 weist in Richtung des Zentrums des vierteiligen Ausgleichskreuzes 3 hin die zueinander angestellten Kegelflächen 21, 22 auf, welche von einer gemeinsamen Stirnfläche 23 abgestumpft sind. Die Kegelflächen 21, 22 des Bolzens 24 bilden zusammen im Verbund mit den Kegelflächen 21, 22 der drei übrigen Bolzen 25, 26, 27 die gemeinsame formschlüssige Anlagekontur 28.

In Fig. 7 ist der in Fig. 6 gezeigte Bolzen 24 in Draufsicht dargestellt.

In Fig. 8 ist das Kegelradausgleichsgetriebe 1 in vertikaler Schnittdarstellung gezeigt. Das hier gezeigte Kegelradausgleichsgetriebe 1 weist ein vierteiliges Ausgleichskreuz 3 mit den Bolzen 24, 25, 26, 27 der Ausführungsform gemäß Fig. 5, Fig. 6, Fig. 7 auf. Das mit den Ausgleichskegelrädern 2 kämmende Kegelrad 15 ist hier nur schematisch dargestellt.

## Patentansprüche

1. Kegelradausgleichsgetriebe für Nutzfahrzeuge, mit einem Ausgleichskegelräder (2) tragenden Ausgleichskreuz (3), wobei das Ausgleichskreuz (3) aus vier gleichgestalteten Bolzen (4,5,6,7;24,25,26,27) zusammengesetzt ist, die zum Zentrum des Ausgleichskreuzes (3) hin mit zueinander formschlüssig gestalteter Anlagekontur (8,28) einander fixierend aneinanderliegen und die radial außenseitig von Abstützungen (9) abgestützt sind, **dadurch gekennzeichnet, dass** die die formschlüssige Anlage der Bolzen (4,5,6,7) gewährende Anlagekontur (8) durch zum Zentrum des Ausgleichskreuzes (3) hin ausgerichtete, von den Bolzen (4,5,6,7) abragende Zapfenhälften (18) gegeben ist, deren hieran gebildete Umfangsflächen (18/1), Stirnflächen (18/2) und ebene Anlageflächen (19) miteinander korrespondierend zur Anlage gebracht sind.

2. Kegelradausgleichsgetriebe für Nutzfahrzeuge, mit einem Ausgleichskegelräder (2) tragenden Ausgleichskreuz (3), wobei das Ausgleichskreuz (3) aus vier gleichgestalteten Bolzen (4,5,6,7;24,25,26,27) zusammengesetzt ist, die zum Zentrum des Ausgleichskreuzes (3) hin mit zueinander formschlüssig gestalteter Anlagekontur (8,28) einander fixierend aneinanderliegen und die radial außenseitig von Abstützungen (9) abgestützt sind, **dadurch gekennzeichnet, dass** die die formschlüssige Anlage der Bolzen (24,25,26,27) gewährende Anlagekontur (28) durch zum gemeinsamen Zentrum des Ausgleichskreuzes (3) hin ausgerichtete, an den Bolzen (24,25,26,27) gebildete Kegelfächen (21,22) gegeben ist, die miteinander korrespondierend formschlüssig zur Anlage gebracht sind.

3. Kegelradausgleichsgetriebe nach Anspruch 2, **dadurch gekennzeichnet, dass** die Kegelflächen (21,22) der Bolzen (24,25,26,27) durch eine gemeinsame Stirnfläche (23) abgestumpft sind.

4. Kegelausgleichsgetriebe nach Anspruch 1 bis 3, **dadurch gekennzeichnet, dass** als Abstützung (9) die Bolzen (4,5,6,7;24,25,26,27) des Ausgleichskreuzes (3) radial außenseitig von einem das Kegelradausgleichsgetriebe (1) umgebenden Tellerrad axial abgestützt sind.

5. Kegelradausgleichsgetriebe nach Anspruch 1 bis 4, **dadurch gekennzeichnet, dass** die Bolzen (4,5,6,7;24,25,26,27) mit ihren radial außenliegenden Enden (17) in je einer hiermit korrespondierenden Aufnahmebohrung (16) eines Ausgleichsgehäuses (10, 11) des Kegelradausgleichsgetriebes (1) aufgenommen sind.

6. Kegelradausgleichsgetriebe nach Anspruch 1 bis 5, **dadurch gekennzeichnet, dass** das Ausgleichsgehäuse (17) zweiteilig ausgebildet ist.

## Claims

1. Bevel-gear differential for commercial vehicles, with a differential cross (3) bearing differential bevel gears (2) and composed of four identically designed pins 4,5,6,7;24,25,26,27) which have a contact contour (8, 28) designed for mutual positive connection, contact one another in a mutually fixing manner towards the centre of the differential cross (3) and are supported radially on the outside by supports (9), **characterised in that** the contact contour (8) allowing the positive contact of the bolts (4,5,6,7) is provided in the form of stud halves (18) aligned towards the centre of the differential cross (3) and projecting from the pins (4,5,6,7), and that the circumferential faces (18/1), frontal faces (18/2) and flat contact faces (19) of said stud halves (18) can be brought into corresponding contact with one another.

2. Bevel-gear differential for commercial vehicles, with a differential cross (3) bearing differential bevel gears (2) and composed of four identically designed pins 4,5,6,7;24,25,26,27) which have a contact contour (8, 28) designed for mutual positive connection, contact one another in a mutually fixing manner towards the centre of the differential cross (3) and are supported radially on the outside by supports (9), **characterised in that** the contact contour (28) ensuring the positive contact of the pins (24,25,26,27) is provided in the form of bevel faces (21, 22) aligned towards the common centre of the differential cross (3) and provided on the pins (24,25,26,27), which bevel faces (21, 22) can be brought into corresponding positive contact with one another.

3. Bevel-gear differential according to Claim 2, **characterised in that** the bevel faces (21, 22) on the pins (24,25,26,27) are blunt as a result of a common frontal face (23).

4. Bevel-gear differential according to the Claims 1 to 3, **characterised in that** for the purpose of support (9) the pins (4,5,6,7;24;25,26,27) of the differential cross (3) are axially supported radially on the outside by a crown wheel encompassing the bevel gear differential (1).

5. Bevel-gear differential according to the Claims 1 to 4, **characterised in that** each of the pins (4,5,6,7;24;25,26,27) with their ends (17) radially arranged on the outside is supported in a corresponding support bore (16) in a differential housing (10, 11) for the bevel-gear differential (1).

6. Bevel-gear differential according to the Claims 1 to 5, **characterised in that** the differential housing (17) is composed of two pieces.

## Revendications

1. Différentiel à pignons coniques pour véhicules industriels, avec croisillon (3) portant des pignons coniques compensateurs (2), auquel cas le croisillon (3) est composée de quatre axes (4, 5, 6, 7 ; 24, 25, 26, 27) de forme identique, qui sont reliés entre eux par fixation les uns aux autres au centre du croisillon (3) avec des contours d'appui (8, 28) conçus de manière à adhérer à la forme de chacun et qui sont soutenus de manière radiale côté extérieur par des supports (9), **caractérisé en ce que** le contour d'appui (8) garantissant l'appui adhérent à la forme des axes (4, 5, 6, 7) résultent des demi-pivots (18) orientés vers le centre du croisillon (3) et dépassant des axes (4, 5, 6, 7), des demi-pivots dont les surfaces circonférentielles (18/1), les surfaces avant (18/2) et surfaces d'appui plates (19) sont placées de manière correspondante les unes aux autres par rapport à l'appui.

2. Différentiel à pignons coniques pour véhicules industriels, avec un croisillon (3) portant des pignons coniques compensateurs (2), auquel cas le croisillon (3) est composé de quatre axes (4, 5, 6, 7 ; 24, 25, 26, 27) de forme identique, qui sont reliés entre eux par fixation les uns aux autres au centre du croisillon (3) avec des contours d'appui (8, 28) conçus de manière à adhérer à la forme de chacun et qui sont soutenus de manière radiale côté extérieur par des supports (9), **caractérisé en ce que** le contour d'appui (8) garantissant l'appui adhérent à la forme des axes (24, 25, 26, 27) résulte des surfaces coniques (21, 22) orientées vers le centre commun du croisillon (3) et reliées aux axes (24, 25, 26, 27), des surfaces coniques qui sont placées de manière correspondante les unes aux autres et adhérentes à la forme par rapport à l'appui.

3. Différentiel à pignons coniques selon la revendication 2, **caractérisé en ce que** les surfaces coniques (21, 22) des axes (24, 25, 26, 27) sont tronquées par une surface avant (23) commune.

4. Différentiel à pignons coniques selon les revendications 1 à 3, **caractérisé en ce que**, comme support (9), les axes (4, 5, 6, 7 ; 24, 25, 26, 27) du croisillon (3) sont soutenus de manière radiale côté extérieur par une couronne entourant le différentiel à pignons coniques (1).

5. Différentiel à pignons coniques selon les revendications 1 à 4, **caractérisé en ce que** les axes (4, 5, 6, 7 ; 24, 25, 26, 27) sont logés par leur extrémité (17) placée radialement à l'extérieur dans chaque alésage de logement (16) leur correspondant d'un boîtier (10, 11) de différentiel à pignons coniques (1).

6. Différentiel à pignons coniques selon les revendications 1 à 5, **caractérisé en ce que** le boîtier de différentiel (17) est composé de deux parties.
